# EUROPEAN PATENT APPLICATION

(11) **EP 3 926 283 A1**
(43) Date of publication of application: **22.12.2021**
(21) Application number: 20755339.7
(22) Date of filing: 13.02.2020
(51) Int. Cl.: F28D 9/00, F28F 3/00, F28F 3/08, F28F 21/00, F28F 21/06, D21H 15/02, D21H 19/12, D21H 19/20, D21H 19/40, D21H 19/64, D21H 21/14, F24F 7/08, D21H 27/00

(54) **ENTHALPY EXCHANGE ELEMENT PAPER AND ENTHALPY EXCHANGE ELEMENT**

(30) Priority: 14.02.2019 JP 2019024767; 26.02.2019 JP 2019032616; 28.02.2019 JP 2019035054; 08.03.2019 JP 2019042346; 11.03.2019 JP 2019043815; 14.03.2019 JP 2019047623; 15.03.2019 JP 2019048100; 03.09.2019 JP 2019160214
(71) Applicant: Mitsubishi Paper Mills Limited, Tokyo 130-0026 (JP)
(72) Inventor: YAMANE, Kengo, Tokyo 130-0026 (JP); MATSUOKA, Masanobu, Tokyo 130-0026 (JP); MORI, Nobuyoshi, Tokyo 130-0026 (JP)
(74) Representative: Beckmann, Claus
(86) International application number: PCT/JP2020/005500
(87) International publication number: WO 2020/166653

(57) **Abstract**

A total heat exchanging element paper for use in a total heat exchanger, comprising a substrate sheet containing natural pulp, having excellent strength and gas barrier properties, and characterized in that the substrate sheet contains natural pulp having a length-weighted average fiber length of 0.7 to 1.7 mm, the natural pulp has a maximum frequency peak between 0.5 mm and 1.5 mm in the fiber length histogram, and the percentage of fibers having a fiber length of 1.0 mm or more is 20 % or more.

## Description

### TECHNICAL FIELD

The present invention relates to a total heat exchanging element paper for use in a total heat exchanging element which carries out the exchange of sensible heat (temperature) and latent heat (humidity) at the same time and which is mounted on a total heat exchanger for supplying fresh outdoor air into a room and discharging foul air in the room to keep a comfortable space in buildings, offices, stores and houses.

### BACKGROUND ART

As a ventilation method having excellent air-conditioning efficiency for indoor air-conditioning, there is well known total heat exchange that the exchange of temperature (sensible heat) and humidity (latent heat) can be carried out at the same time between an air supply flow for supplying fresh outdoor air and an exhaust flow for discharging foul indoor air.

Since an air supply flow and an exhaust flow are formed by independent channels sandwiching a total heat exchanging element paper to carry out total heat exchange between them in a total heat exchanging element for carrying out total heat exchange, when indoor ventilation is carried out with a total heat exchanger having this total heat exchanging element, air-conditioning efficiency can be significantly improved.

Total heat exchanging elements are divided into crossflow type and counterflow type and manufactured by processing a total heat exchanging element paper. Although both types are manufactured by using a dedicated machine, in the case of the counterflow type in particular, there is a step for attaching a resin frame for securing channels for letting indoor air and outdoor air pass therethrough to the total heat exchanging element paper. In general, from the viewpoint of work efficiency, an injection molding machine is used to manufacture the resin frame. At this point, when the strength of the total heat exchanging element paper is insufficient, due to the pressure of the resin to be injected, the total heat exchanging element paper is broken, whereby the total heat exchanging element does not function at all.

Since conventional total heat exchanging element papers comprise a porous material, it has permeability for a foul gas component such as carbon dioxide and has a defect that supply air and exhaust air are mixed in a total heat exchanging element during total heat exchange, thereby reducing ventilation efficiency. The mixing of supply air and exhaust air is a fatal defect for a total heat exchanger. In a total heat exchanger in which supply air and exhaust air are mixed with each other, it might be evaluated such that indoor air and outdoor air are not exchanged while they are collected by energy but foul indoor air is merely agitated. Therefore, when indoor air and outdoor air are mixed with each other, the purpose of ventilation is not attained and, accordingly, the total heat exchanger does not function at all.

For this reason, a total heat exchanging element paper having such high strength that it is not broken when a total heat exchanging element is manufactured and also such high gas barrier properties that supply air and exhaust air are not mixed with each other is desired. To meet this, there is disclosed a sheet member produced by applying an adhesive medium such as a binder, molten fiber or adhesive powder to the surface of a sheet substrate composed of a nonwoven fabric or woven fabric having a thickness of 0.1 to 1.0 mm and composed of glass fibers, synthetic fibers or natural fibers having a fiber diameter of 0.3 to 50 µm, forming a thin layer of ultrafine fibers having a fiber diameter of 0.01 to 0.5 µm on the obtained laminate and drying and fixing it to be integrated into a single unit (Patent Document 1). Although the strength of the sheet substrate is retained, the member has an economical problem and no gas barrier effect.

Further, there is disclosed a moisture permeable sheet which comprises a fiber substrate subjected to parchment processing and a moisture absorbent contained in the fiber substrate and has a moisture permeability of 1,000 g/m²·24 hr or more (Patent Document 2). However, there is room for the improvement of the strength and gas barrier properties of the fiber substrate.

There is also disclosed a total heat exchanging element paper composed of paper containing natural pulp which has been beaten to a Canadian modification freeness of 150 ml or less (Patent Document 3). Although it has no problem with gas barrier properties, it cannot obtain sufficiently high strength.

There is further disclosed a base paper for use in a total heat exchanging element, which comprises a paper substrate essentially made of pulp and 10 to 25 mass% of calcium chloride contained in the paper substrate and has a moisture absorption coefficient of 15 to 30 % (Patent Document 4). However, to obtain strength and gas barrier properties at the same time with this base paper, there is room for improvement.

Further, there is disclosed a total heat exchanging element paper which is produced by impregnating a base paper made of wood pulp containing 40 parts or more by mass of softwood pulp based on 100 parts by mass of wood pulp and having a beating degree of 40° SR or more in terms of Schopper freeness with a moisture absorbent and a fire-proof agent and which has a moisture permeability measured by a JIS Z-0208 moisture permeability test of 6,000 g/m²·24 hr or more, a carbonization length measured by a JIS Z-2150 fire-proof test of 10 cm or less, an air permeability measured by a JIS P-8117 air permeability test of 500 sec/100 ml or more and a carbon dioxide transfer rate of 1 % or less (Patent Document 5). However, to obtain strength and gas barrier properties at the same time with this paper, there is room for improvement.

### PRIOR ART DOCUMENTS

### Patent Documents

Patent Document 1: JP-A 2011-237157
Patent Document 2: JP-A 2016-108704
Patent Document 3: WO2002/099193 pamphlet
Patent Document 4: JP-A 2007-119969
Patent Document 5: JP-A 2005-325473

### DISCLOSURE OF THE INVENTION

### PROBLEM TO BE SOLVED BY THE INVENTION

It is an object of the present invention to provide a total heat exchanging element paper for use in a total heat exchanger, having excellent strength and gas barrier properties.

Other objects of the present invention will become apparent from the following description.

### MEAMS FOR SOLVING THE PROBLEM

The object of the present invention can be attained by the following means.
<1> A total heat exchanging element paper comprising a substrate sheet containing natural pulp, wherein
   the substrate sheet contains natural pulp having a length-weighted average fiber length of 0.7 to 1.7 mm, the natural pulp has a maximum frequency peak between 0.5 mm and 1.5 mm in the fiber length histogram, and the percentage of fibers having a fiber length of 1.0 mm or more is 20 % or more.
<2> The total heat exchanging element paper in the above paragraph <1>, wherein the natural pulp has a peak between 0.0 mm and 0.5 mm besides the maximum frequency peak in the fiber length histogram.
<3> The total heat exchanging element paper in the above paragraph <1>, wherein the inclination of the percentage of fibers having a fiber length in increments of 0.05 mm between 1.00 mm and 2.00 mm is -3.0 to -1.0.
<4> The total heat exchanging element paper in any one of the above paragraphs <1> to <3>, wherein the substrate sheet further comprises colloidal silica.
<5> The total heat exchanging element paper in any one of the above paragraphs <1> to <4>, wherein the substrate sheet further comprises polystyrene sulfonic acid.
<6> The total heat exchanging element paper in any one of the above paragraphs <1> to <5>, which further comprises alumina sol.
<7> The total heat exchanging element paper in any one of the above paragraphs <1> to <6>, which further comprises polyvinyl alcohol having a saponification degree of 60 to 85 mol%.
<8> The total heat exchanging element paper in any one of the above paragraphs <1> to <7>, wherein the substrate sheet further comprises dry silica fine particles.
<9> The total heat exchanging element paper in any one of the above paragraphs <1> to <8>, wherein the substrate sheet further comprises a water-soluble cellulose derivative.
<10> A total heat exchanging element which is formed by using the total heat exchanging element paper of any one of the above paragraphs <1> to <9>.

### EFFECT OF THE INVENTION

The total heat exchanging element paper of the present invention makes it possible to achieve good balance between strength and gas barrier properties at the time of manufacturing a total heat exchanging element due to the entanglement of natural pulp contained in a substrate sheet.

### BRIEF DESCRIPTION OF THE DRAWINGS

[Fig. 1] This shows an example of the fiber length histogram of natural pulp having a maximum frequency peak between 0.5 mm and 1.5 mm.
[Fig. 2] This shows an example of the fiber length histogram of natural pulp having a maximum frequency peak between 0.5 mm and 1.5 mm and a peak between 0.0 mm and 0.5 mm besides the maximum frequency peak.
[Fig. 3] This shows an approximate straight line of the percentages of fibers having a fiber length in increments of 0.05 mm between 1.00 mm and 2.00 mm in the fiber length histogram of Fig. 1.
[Fig. 4] This is a schematic diagram of a crossflow total heat exchanging element.

### BEST MODE FOR CARRYING OUT THE INVENTION

A detailed description is subsequently given of the total heat exchanging element paper of the present invention. The total heat exchanging element paper of the present invention is composed of a substrate sheet containing natural pulp. The substrate sheet contains natural pulp having a length-weighted average fiber length of 0.7 to 1.7 mm, the natural pulp has a maximum frequency peak between 0.5 mm and 1.5 mm in the fiber length histogram, and the percentage of fibers having a fiber length of 1.0 mm or more is 20 % or more.

The substrate sheet in the present invention is preferably a sheet produced from natural pulp as a raw material by a wet papermaking method. As the natural pulp, wood pulp fibers such as hardwood bleached kraft pulp (abbreviation: LBKP, English name: Hardwood Bleached Kraft Pulp), softwood bleached kraft pulp (abbreviation: NBKP, English name: Softwood Bleached Kraft Pulp), hardwood bleached sulfite pulp (abbreviation: LBSP, English name: Hardwood Bleached Sulfite Pulp), softwood bleached sulfite pulp (abbreviation: NBSP, English name: Softwood Bleached Sulfite Pulp), hardwood unbleached kraft pulp (abbreviation: LUKP, English name: Hardwood Unbleached Kraft Pulp) and softwood unbleached kraft pulp (abbreviation: NUKP, English name: Softwood Unbleached Kraft Pulp) are preferably used alone or in combination. As the other fibers of the substrate sheet, vegetable fibers such as cotton, cotton linters, hemp, bamboo, sugar cane, corn and kenaf; animal fibers such as wool and silk; and cellulose regenerated fibers such as rayon, cupra and lyocell may be used alone or in combination.

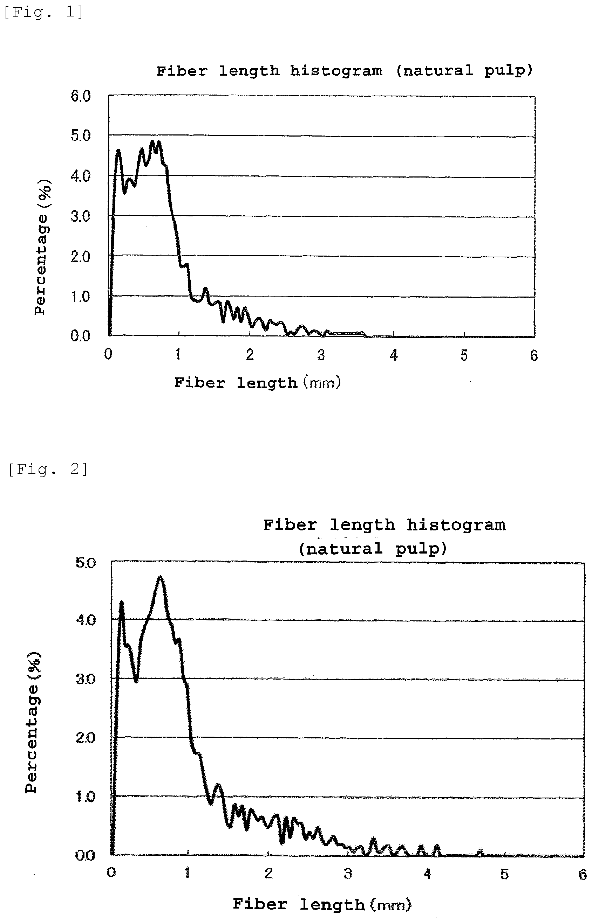

In the present invention, the length-weighted average fiber length of the natural pulp is 0.7 to 1.7 mm. As shown in Fig. 1 and Fig. 2, in the fiber length histogram of the natural pulp, the percentage of fibers having a maximum frequency peak between 0.5 mm and 1.5 mm and a fiber length of 1.0 mm or more is 20 % or more. In the process of producing a total heat exchanging element from the total heat exchanging element paper, when the length-weighted average fiber length of the natural pulp is 0.7 to 1.7 mm and fibers as large as 1.0 mm or more are entangled, the strength and gas barrier properties of the total heat exchanging element paper are improved. The maximum frequency peak is preferably between 0.7 mm and 1.2 mm. The percentage of fibers having a fiber length of 1.0 mm or more is preferably 25 % or more, more preferably 30 % or more, particularly preferably 35 % or more. The percentage of fibers having a fiber length of 1.0 mm or more is preferably 60 % or less.

A total heat exchanging element paper having a peak (second peak) between 0.0 mm and 0.5 mm besides the maximum frequency peak in the fiber length histogram of the natural pulp retains strength, hardly causes the mixing of supply air and exhaust air and has excellent gas barrier properties as fine fibers close gaps between fibers.

When the inclination of the percentage of fibers having a fiber length in increments of 0.05 mm between 1.00 mm and 2.00 mm is -3.0 to -1.0, the strength and gas barrier properties of the total heat exchanging element paper become higher. The "inclination of the percentage of fibers having a fiber length in increments of 0.05 mm between 1.00 mm and 2.00 mm" may be simply referred to as "inclination of percentage" hereinafter. The inclination of percentage is preferably -2.5 to - 1.5.

The fiber length and fiber length distribution histogram of the natural pulp of the present invention were measured by using a fiber quality analyzer manufactured by OpTest Equipment Inc. Canada in accordance with the "fiber length measuring method using pulp-optical automatic analysis" specified in JIS P8226:2006 (polarizing method).

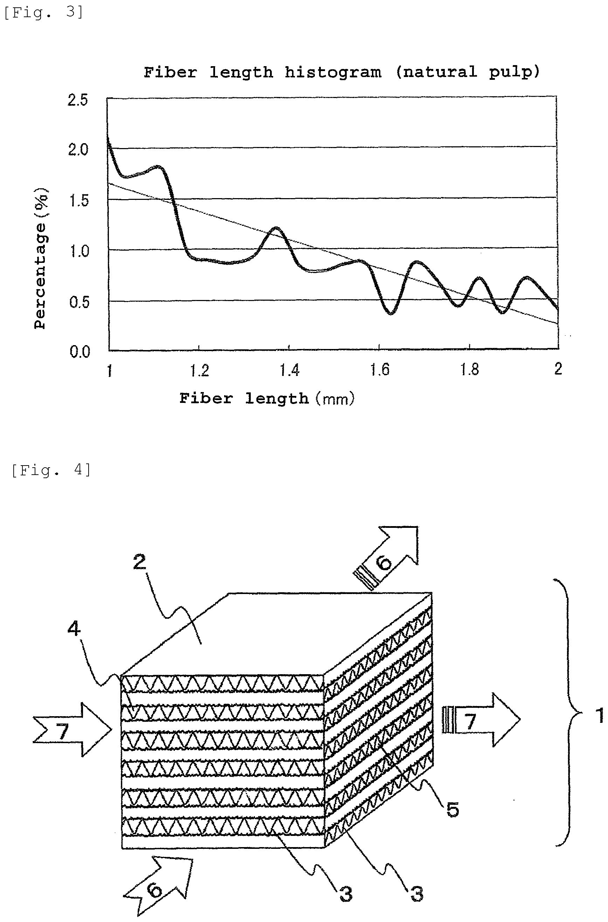

The "fiber length", "average fiber length" and "fiber length distribution" in the present invention mean "length-weighted fiber length", "length-weighted average fiber length" and "length-weighted fiber length distribution" all of which are measured and calculated as described above, respectively. "The percentage of fibers as large as 1.0 mm or more" means "the percentage of fibers having a fiber length of 1.0 mm or more" and a numerical value of "percentage of fibers having a fiber length of 1.0 mm or more" in the "length-weighted fiber length distribution" which is measured and calculated as described above. "The inclination of the percentage of fibers having a fiber length in increments of 0.05 mm between 1.00 mm and 2.00 mm" means the inclination of an approximate straight line obtained by calculating an approximate straight line by a least squares method for the percentage of fibers having a fiber length in increments of 0.05 mm between 1.00 mm and 2.00 mm as shown in Fig. 3.

The natural pulp is subjected to a beater, PFI mill, single disk refiner (SDR), double disk refiner (DDR), ball mill, dyno-mill, grinder, rotational blade homogenizer which applies shear force with a high-speed rotating blade, double-cylinder high-speed homogenizer which generates shear force between a cylindrical inner blade rotating at high speed and a fixed outer blade, ultrasonic crusher for microfabrication with a ultrasonic impact, or high-pressure homogenizer which increases the speed of a fiber suspension by passing through a small-diameter orifice by applying a pressure difference of at least 20 MPa and colliding it to reduce the speed abruptly, thereby applying shear force and cutting force to fibers, so as to obtain the above desired fiber length distribution. Out of these, a refiner is preferred. The target fiber length distribution of the natural pulp can be achieved by adjusting the types of beating and dispersion devices and processing conditions (fiber concentration, temperature, pressure, the number of revolutions, the shape of the blade of a refiner, a gap between the plates of a refiner and the number of times of processing).

The substrate sheet may contain fillers such as heavy calcium carbonate, light calcium carbonate, kaolin, talc, clay, titanium dioxide, aluminum hydroxide, silica, alumina and organic pigment and compounding agents such as adhesive, sizing agent, fixing agent, yield improving agent and paper strengthening agent so as to obtain required density, smoothness and moisture retention.

To produce the substrate sheet, a wet papermaking method for forming natural pulp into a sheet by using an ordinary fourdrinier papermaking machine or cylinder papermaking machine is employed.

The substrate sheet may be subjected to surface size pressing with a size press or roll coater installed in a papermaking machine so as to obtain required density, smoothness, air permeability and strength. As the components of a surface size press liquid, starch refined from a natural plant, hydroxyethylated starch, oxidized starch, etherified starch, starch phosphate, enzyme modified starch, cool water-soluble starch obtained by flash drying them and synthetic binders such as polyvinyl alcohol may be used.

The substrate sheet may be calendered so as to obtain required density, smoothness, air permeability and strength. As a calender, a calender having at least one combination of rolls selected from the group consisting of a combination of hard rolls, a combination of elastic rolls and a combination of a hard roll and an elastic roll is preferably used. Examples of the calender include machine calender, soft-nip calender, super calender, multi-stage calender and multi-nip calender.

In the total heat exchanging element paper of the present invention, the substrate sheet preferably contains colloidal silica. When the total heat exchanging element paper contains colloidal silica, its moisture resistance can be improved.

Colloidal silica is also called "sol method silica" and obtained by dispersing silicon dioxide obtained by thermally aging silica sol acquired by double decomposition with an acid such as sodium silicate or passing it through an ion exchange resin layer in water into a colloidal state. Examples of the colloidal silica include colloidal silicas described in JP-A 60-219083, JP-A 61-19389, JP-A 61-188183, JP-A 63-178074 and JP-A 5-51470.

It is assumed that one of the reasons that moisture resistance is improved by containing colloidal silica is the change of the wettability of the total heat exchanging element paper. In the case of a total heat exchanging element paper containing no colloidal silica, the wet-spreading of adhered water is fast, thereby causing water dripping in a short period of time. On the other hand, in the case of a total heat exchanging element paper containing colloidal silica, wet-spreading is suppressed by the contained colloidal silica. Another reason is the water retaining capability of colloidal silica itself. Water adhered to the surface is retained efficiently by colloidal silica, thereby suppressing water dripping. That is, it is assumed that moisture resistance is improved by these two effects.

The content of colloidal silica in the substrate sheet is preferably 0.2 to 20 mass%. When the content of colloidal silica is lower than 0.2 mass%, moisture resistance may not change as compared with a case where colloidal silica is not contained. When the content of colloidal silica is higher than 20 mass%, the effects may reach a ceiling.

The average particle diameter of colloidal silica is not particularly limited but preferably 1 to 100 nm, more preferably 10 to 50 nm. The average particle diameter can be obtained by measuring a diluted dispersion of the particles with a particle size distribution meter using a laser diffraction/scattering method. For example, it can be obtained by using the Microtrac (registered trademark) MT3000II laser diffraction/scattering particle size distribution meter of Nikkiso Co., Ltd.

Colloidal silica products having various average particle sizes have already been commercially available and can be used in the present invention. The colloidal silica products include the SNOWTEX (registered trademark) series of Nissan Chemical Industries, Ltd., the SILICADOL (registered trademark) series of The Nippon Chemical Industrial Co., Ltd., the PL series of Fuso Chemical Co., Ltd., the ADELITE (registered trademark) AT series of ADEKA Corporation, the LUDOX (registered trademark) series of W. R. GRACE Co., Ltd. (US), the NYACOL (registered trademark) series of NANO TECHNOLOGIES (US) and the Kleboso (registered trademark) series of MERCK (Germany). Cationic colloidal silica products out of these include the SNOWTEX AK-XS, AK, AK-L, AK-YL and AK-PS-S of Nissan Chemical Industries, Ltd. and the LUDOX CL and CL-P of W.R. GRACE (US).

In the total heat exchanging element paper of the present invention, the substrate sheet preferably contains polystyrene sulfonic acid or a salt thereof. When the substrate sheet contains polystyrene sulfonic acid or a salt thereof, the hydrophilicity of the substrate sheet is improved, thereby making it possible to obtain high moisture permeability.

The polystyrene sulfonic acid or a salt thereof is represented by the following formula (1). 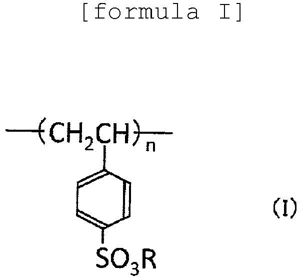 (In the formula (I), n is an integer of 1 or more, and R is a hydrogen atom or alkali metal.)

When the polystyrene sulfonic acid or a salt thereof is represented by the formula (I), a commercially available product thereof may be used without a problem. The mass average molecular weight of polystyrene sulfonic acid is not particularly limited but preferably 10,000 to 1,000,000. When the molecular weight falls below this range, moisture permeability may not be fully developed and when the molecular weight exceeds this range, compatibility with other chemicals may not be obtained. A free acid or alkali metal salt such as sodium or potassium salt is acceptable and a sodium salt is preferred. The content of polystyrene sulfonic acid or a salt thereof in the substrate sheet is preferably 0.1 to 10 mass%. When the content is lower than 0.1 mass%, moisture permeability may not change as compared with a case where polystyrene sulfonic acid or a salt thereof is not contained. When the content of polystyrene sulfonic acid or a salt thereof is higher than 10 mass%, its effect may reach a ceiling.

Products of polystyrene sulfonic acid or a salt thereof having various molecular weights have already been commercially available and may be used in the present invention. For example, the VERSA-TL series of Akzo Nobel Surface Chemistry which can be purchased from Shima Trading Co., Ltd. may be used.

The total heat exchanging element paper of the present invention preferably contains alumina sol. When the total heat exchanging element paper contains alumina sol, moisture resistance can be improved.

The alumina sol is colloidal inorganic fine particles, and alumina sol having a particle diameter of 0.01 to 0.3 µm is preferably used. This is so-called "colloidal alumina" and commercially available products in the form of a water dispersion may be used directly. The commercially available products include ALUMINA SOL 100, ALUMINA SOL 200 and ALUMINA SOL 520-A (trade names of Nissan Chemical Industries, Ltd.) and CATALOID (registered trademark) AS-1, CATALOID AS-2 and CATALOID AS-3J (trade names of JGC C&C).

To measure the particle diameter of alumina sol, a specific surface area measuring method using observation through a transmission electron microscope or BET adsorption is employed. The content of the alumina sol in the total heat exchanging element paper is not particularly limited but preferably 0.5 to 1.0 g/m². When the content is lower than 0.5 g/m², the effect of improving moisture resistance may become small. When the content is higher than 10 g/m², the effect of improving the moisture resistance of the total heat exchanging element reaches saturation, which is uneconomical, and "powder fall" that alumina sol falls off from the total heat exchanging element paper may occur.

It is assumed that one of the reasons that the moisture resistance of the total heat exchanging element paper is improved by containing alumina sol is the change of the wettability of the surface of the total heat exchanging element paper. When alumina sol is not contained, the wet-spreading of water adhered to the surface is fast, thereby causing water dripping in a short period of time. When alumina sol is contained, this wet-spreading is suppressed by alumina sol existent on the surface layer. Another reason is the water retaining capability of alumina sol itself so that water adhered to the surface is held by alumina sol, thereby suppressing water dripping. That is, it is assumed that moisture resistance is improved by these two effects.

The total heat exchanging element paper of the present invention preferably contains polyvinyl alcohol having a saponification degree of 60 to 85 mol%. When the total heat exchanging element paper contains the polyvinyl alcohol having a saponification degree of 60 to 85 mol%, heat exchange efficiency can be improved.

When the saponification degree of the polyvinyl alcohol in use is higher than 85 mol% or lower than 60 mol%, the heat exchange efficiency of a total heat exchanging element is not improved disadvantageously.

As for the reason that the heat exchange efficiency of the total heat exchanging element is improved, it is assumed that the strength and hygroscopicity of a polyvinyl alcohol film having a saponification degree of 60 to 85 mol% are high and balance between these physical properties is good, thereby making it possible to improve the heat exchange efficiency of a total heat exchanging element formed by using the total heat exchanging element paper containing the polyvinyl alcohol having a saponification degree of 60 to 85 mol%.

The content of the polyvinyl alcohol having a saponification degree of 60 to 85 mol% in the total heat exchanging element paper is not particularly limited but preferably 0.5 to 10 g/m². When the content falls below 0.5 g/m², the effect of improving the heat exchange efficiency of a total heat exchanging element may become small. When the content exceeds 10 g/m², the heat exchange efficiency of the total heat exchanging element may reach saturation, which is uneconomical.

In the total heat exchanging element paper of the present invention, the substrate sheet preferably contains dry silica fine particles. When the substrate sheet contains dry silica fine particles, moisture resistance is improved.

The dry silica fine particles are silica fine particles obtained by a silica powder production method in which a silicon compound is produced by incineration and grown and agglomerated in a flame or in the vicinity of a flame, i.e., so-called "dry method". Although various production methods such as (1) a sol-gel method, (2) a chlorosilane flame hydrolyzing method, (3) a silicon powder combustion method, (4) an alkoxysilane combustion method and (5) a siloxane combustion method are proposed as the dry method, the production method is not particularly limited in the present invention. There are two different types of dry silica fine particles: hydrophilic dry silica and hydrophobic dry silica. Hydrophilic dry silica fine particles having excellent water dispersibility and water adsorptivity are preferably used.

It is assumed that one of the reasons that moisture resistance is improved when the substrate sheet contains the dry silica fine particles is the change of the wettability of the total heat exchanging element paper. In the case of a total heat exchanging element paper containing no dry silica fine particles, the wet-spreading of adhered water is fast, thereby causing water dripping in a short period of time. In the case of a total heat exchanging element paper containing dry silica fine particles, it is considered that this wet-spreading is suppressed due to the adsorption of a water molecule by the silanol group of the contained dry silica fine particles. Another reason is the water retaining capability of the dry silica fine particles themselves. Water adhered to the surface is held efficiently by the dry silica fine particles, thereby suppressing water dripping. That is, it is assumed that moisture resistance is improved by these two effects.

In the total heat exchanging element paper of the present invention, the content of the dry silica fine particles in the substrate sheet is preferably 0.5 to 25 mass%, more preferably 2.0 to 20 mass%, much more preferably 5.0 to 15 mass%. When the content is lower than 0.5 mass%, the effect of improving moisture resistance may become small. When the content is higher than 25 mass%, the effects may reach a ceiling.

The average particle diameter of the dry silica fine particles is not particularly limited but preferably 5 to 100 nm, more preferably 10 to 50 nm. The average particle diameter can be obtained by measuring a diluted dispersion of the particles with a particle size distribution meter using a laser diffraction/scattering method. For example, it can be obtained by using the Microtrac (registered trademark) MT3000II laser diffraction/scattering particle size distribution meter of Nikkiso Co., Ltd.

In the total heat exchanging element paper of the present invention, the substrate sheet preferably contains a water-soluble cellulose derivative. When the substrate sheet contains a water-soluble cellulose derivative, the moisture permeability of the total heat exchanging element paper is improved.

Examples of the water-soluble cellulose derivative include methyl cellulose, ethyl cellulose, hydroxymethyl cellulose, hydroxyethyl cellulose, hydroxypropyl cellulose, hydroxyethyl methyl cellulose, hydroxypropyl methyl cellulose, carboxymethyl cellulose, carboxyethyl cellulose and aminoethyl cellulose. The present invention is not limited to these.

It is assumed that the reason that the moisture permeability of the total heat exchanging element paper is improved when the substrate sheet contains a water-soluble cellulose derivative is that water absorbed to the surface of the total heat exchanging element paper through a hydroxyl group contained in the water-soluble cellulose derivative is promoted to move in the thickness direction of the paper, thereby improving heat exchange performance.

The substitution degree of the water-soluble cellulose derivative used in the present invention is preferably 0.3 to 2.2, more preferably 0.5 to 2.0, much more preferably 0.6 to 1.2. When the substitution degree is lower than 0.4, the water-soluble cellulose derivative itself becomes insoluble in water and therefore may not be used. When the substitution degree is higher than 2.2, sufficiently high moisture permeability may not be obtained. The viscosity at the time of 60 revolutions measured with a Brookfield viscometer at 25°C of a 2 mass% aqueous solution of the water-soluble cellulose derivative used in the present invention is preferably 3 to 10,000 mPa·s, more preferably 10 to 3,000 mPa·s, much more preferably 20 to 1,000 mPa·s. When a water-soluble cellulose derivative having a viscosity at 25°C of a 2 mass% aqueous solution thereof of less than 3 mPa·s is used, the target moisture permeation effect may not be obtained and when a water-soluble cellulose derivative having a viscosity of more than 10,000 mPa·s is used, it is difficult to uniformly carry the water-soluble cellulose derivative on the substrate sheet, whereby moisture permeability may deteriorate.

The content of the water-soluble cellulose derivative in the total heat exchanging element paper of the present invention is preferably 0.5 to 10 g/m², more preferably 1 to 8 g/m², much more preferably 2 to 6 g/m². When the content is lower than 0.5 g/m², the target moisture permeation effect may not be obtained and when the content is higher than 10 g/m², the effect may reach a ceiling and strength may deteriorate.

The total heat exchanging element paper may contain a flame retardant to provide flame retardancy. Examples of the flame retardant include inorganic flame retardants, inorganic phosphorus-based compounds, nitrogen-containing compounds, chlorine-based compounds and bromine-based compounds. For example, aqueous solutions of a mixture of borax and boric acid, aluminum hydroxide, antimony trioxide, ammonium phosphate, ammonium polyphosphate, ammonium sulfamate, guanidine sulfamate, guanidine phosphate, amide phosphate, chlorinated polyolefin, ammonium bromide and non-ether type polybromo cyclic compound and flame retardants dispersible in water may be used. As for the level of flame retardancy, the carbonization length measured based on JIS A 1322:1966 is preferably less than 10 cm. The content of the flame retardant is not particularly limited but preferably 5 to 10 g/m² though this depends on the flame retardant in use. The flame retardant may be used in an amount of more than 10 g/m² but its effect reaches a ceiling.

The total heat exchanging element paper may contain a mildewproof agent to provide mildew resistance. Products which are generally commercially available as mildewproof agents may be used as the mildewproof agent. Examples of the mildewproof agent include organic nitrogen compounds, sulfur-based compounds, organic acid esters, organic iodine-based imidazole compounds and benzazole compounds. As for the level of mildew resistance, it is preferred that the growth of mycelia measured based on JIS Z 2911:2010 should not be observed. The content of the mildewproof agent is preferably 0.5 to 5 g/m². The mildewproof agent may be contained in an amount of more than 5 g/m² but its effect reaches a ceiling.

The total heat exchanging element paper may contain a moisture absorbent to improve humidity exchange efficiency. Examples of the moisture absorbent include inorganic acid salts, organic acid salts, inorganic fillers, polyhydric alcohols, urea's and moisture absorbing (water absorbing) polymers. The inorganic acid salts include lithium chloride, calcium chloride and magnesium chloride. The organic acid salts include sodium lactate, calcium lactate and sodium pyrrolidone carboxylate. The inorganic fillers include aluminum hydroxide, calcium carbonate, aluminum silicate, magnesium silicate, talc, clay, zeolite, diatomaceous earth, sepiolite, silica gel and activated carbon. The polyhydric alcohols include glycerin, ethylene glycol, triethylene glycol and polyglycerin. The urea's include urea and hydroxyethyl urea. The moisture absorbing (water absorbing) polymers include polyaspartic acid, polyacrylic acid, polyglutamic acid, polylysine, alginic acid, carboxymethyl cellulose, hydroxyalkyl cellulose and salts thereof or crosslinked products thereof, carrageenan, pectin, gellan gum, agar, xanthan gum, hyaluronic acid, guar gum, Arabian gum, starch and crosslinked products thereof, polyethylene glycol, polypropylene glycol, collagen, acrylonitrile-based polymer saponified products, starch/acrylic acid salt graft copolymers, vinyl acetate/acrylic acid salt copolymer saponified products, starch/acrylonitrile graft copolymers, acrylic acid salt/acrylamide copolymers, polyvinyl alcohol/maleic anhydride copolymers, polyethylene oxide-based, isobutylene/maleic anhydride copolymers and polysaccharide/acrylic acid salt graft self-crosslinked products. The type and content of the moisture absorbent are selected according to target moisture permeability. From the viewpoints of cost and moisture permeability, at least one moisture absorbent selected from the group consisting of calcium chloride, lithium chloride and magnesium chloride is preferably used. The particularly preferred moisture absorbent is calcium chloride. Calcium chloride may be used in combination with another moisture absorbent.

The content of the moisture absorbent is not particularly limited. Moisture permeability measured at 23°C and a relative humidity of 50 % by using an evaluation method specified in JIS Z 0208:1976 is preferably 300 g/m²·24 h or more though this depends on the type of the moisture absorbent in use. Within this range, a total heat exchanging element having excellent moisture-heat exchange efficiency can be obtained. The content of the moisture absorbent which depends on the type of the moisture absorbent in use is preferably 3 to 15 g/m², more preferably 4 to 10 g/m² as moisture-heat exchange efficiency reaches a ceiling from a certain content. The moisture permeability is preferably 300 to 1,500 g/m²·24 h, more preferably 400 to 1,000 g/m²·24 h.

To contain chemical agents such as colloidal silica, polystyrene sulfonic acid or a salt thereof, alumina sol, polyvinyl alcohol having a saponification degree of 60 to 85 mol%, dry silica fine particles, water-soluble cellulose derivative, flame retardant, mildew-proof agent and moisture absorbent in the total heat exchanging element paper, a method in which the chemical agents can be contained in the substrate sheet as uniformly as possible may be employed without restriction. For example, a method in which natural pump and the chemical agents are mixed together to produce the substrate sheet or a method in which a solution or dispersion containing the chemical agents is applied to, impregnated into or sprayed on a sheet containing natural pulp and the solvent or dispersion medium is removed by drying to contain the chemical agents in the substrate sheet is employed.

A binder may be used to contain the chemical agents. Although the binder is not particularly limited, polyvinyl alcohol-based, (meth)acrylic acid resin-based, aromatic vinyl compound resin-based, styrene butadiene rubber-based, vinyl acetate resin-based, ethylene-vinyl acetate copolymer resin-based, silicon resin-based and fluorine-based resin binders may be used. Out of these, water-soluble binders are particularly preferred.

Although the weight, thickness and density of the total heat exchanging element paper are not particularly limited, from the viewpoint of exchange efficiency, a total heat exchanging element paper having low weight, small thickness and high density is preferred. The weight is preferably 20 to 80 g/m², more preferably 30 to 60 g/m², much more preferably 40 to 50 g/m². The thickness is preferably 20 to 80 µm, more preferably 30 to 60 µm, much more preferably 40 to 50 µm. The density is preferably 0.6 to 1.2 g/cm³, more preferably 0.7 to 1.2 g/cm³, much more preferably 0.8 to 1.1 g/cm³.

### EXAMPLES

The following examples are provided for the purpose of further illustrating the present invention but are in no way to be taken as limiting. "%" and "parts" in examples mean "mass%" and "parts by mass", respectively, unless other noted.

### [freeness]

The freeness was measured by the Canadian standard freeness testing method of JIS P 8121-2:2012. When natural pulp was too fine and could not be measured by the Canadian standard freeness testing method, it was measured by a method (modified freeness measuring method) based on the Canadian standard freeness testing method of JIS P 8121-2:2012 except that 0.5 g of pulp was sampled by absolute drying and the sieving plate was changed to an 80-mesh plain-woven bronze wire. When the freeness was measured by this modified freeness measuring method, "(modified method)" was entered.

### {method of evaluating strength of total heat exchanging element paper}

To evaluate strength, the tensile strength of the total heat exchanging element paper was measured at a test width of 15 mm, a test length of 180 mm and an extension speed of 20 mm/min in a flow direction after humidity control was made at 23°C and a relative humidity of 50 % for 24 hours. The evaluation criteria are given below.

ⓞ: Extremely excellent with a tensile strength of 2.0 kN/m or more
∘: Excellent with a tensile strength of 1.5 kN/m or more and less than 2.0 kN/m
△: Acceptable with a tensile strength of 1.0 kN/m or more and less than 1.5 kN/m
X: Not usable with a tensile strength of less than 1.0 kN/m

### [method of manufacturing total heat exchanging element]

To evaluate gas barrier properties, a total heat exchanging element having a length of 200 mm, a width of 200 mm, a height of 250 mm and a step height of 4 mm was manufactured by using the total heat exchanging element paper. At this point, a 70 g/m² bleached kraft paper was used as a spacer for the total heat exchanging element, and an ethylene-vinyl acetate copolymer resin-based adhesive was used to bond all members together so as to manufacture a crossflow total heat exchanging element having a shape shown in Fig. 4.

A detailed description is subsequently given of the total heat exchanging element having a shape shown in Fig. 4. In the total heat exchanging element 1 which carries out total heat exchange, partition plates 2 for heat exchanging elements (partition materials, liners) are laminated together via spacing plates 3 for total heat exchanging elements (spacers) to constitute air supply paths 4 for introducing outdoor air into a room and exhaust paths 5 for discharging indoor air outside, and the air supply paths 4 and the exhaust paths 5 are independent from each other. Air currents 6 and 7 flow into the air supply paths 4 and the exhaust paths 5 to carry out total heat exchange between the liners 2 for total heat exchanging elements. When indoor ventilation is carried out with a total heat exchanger having this total heat exchanging element 1, air-conditioning efficiency can be significantly improved.

When the spacers 3 for total heat exchanging elements are to be laminated, each of the liners 2 for total heat exchanging elements is placed between upper and lower spacers 3 for total heat exchanging elements and bonded with an adhesive to manufacture the total heat exchanging element 1.

### [method of evaluating gas barrier properties (leakage amount of carbon dioxide)]

A synthetic air gas containing nitrogen and oxygen in a ratio of 79:21 was let pass from the air supply side of the manufactured total heat exchanging element and a foul gas containing carbon dioxide in a certain concentration was let pass from the exhaust side to carry out ventilation. The concentration of carbon dioxide at the output on the air supply side was measured and compared with the concentration of carbon dioxide at the inlet on the exhaust side so as to calculate the leakage amount of carbon dioxide which is represented by "%". The evaluation criteria are given below.

ⓞ: Extremely excellent with a carbon dioxide leakage amount of less than 0.1 %
∘: Excellent with a carbon dioxide leakage amount of 0.1 % or more and less than 1 %
△: Acceptable with a carbon dioxide leakage amount of 1 % or more and less than 5 %.
X: Not usable with a carbon dioxide leakage amount of 5 % or more.

### [moisture resistance: method of evaluating moisture resistance]

The manufactured total heat exchanging element was left at 30°C and a relative humidity of 90 % for 48 hours so as to evaluate the existence of water dripping and the shape change of the total heat exchanging element visually. The evaluation criteria are given below.

ⓞ: Extremely excellent without water dripping and shape change
∘: Excellent with little water dripping and little shape change
△: Acceptable with some water dripping and some shape change
X: Not usable with water dripping and shape change

### (Examples 1-1 to 1-5, Comparative Examples 1-1 to 1-4)

After NBKP was dissociated to a concentration of 3 %, it was adjusted by using a double disk refiner and a deluxe finer to obtain natural pulp having physical property values shown in Table 1. Thereafter, a substrate sheet for total heat exchanging element papers having a weight of 40 g/m² was manufactured with a fourdrinier papermaking machine by using the obtained natural pulp, further impregnated with 5 g/m² of calcium chloride as a moisture absorbent by a nip coater at a speed of 60 m/min and a nip pressure of 3.5 kgf/cm² and dried to obtain a total heat exchanging element paper.

**[Table 1]**

| | Physical property value of natural pulp | | | | | Evaluation of total heat exchanging element paper | |
|---|---|---|---|---|---|---|---|
| | Freeness (ml) | Percentage of fibers having a fiber length of 1.0mm or more (%) | Average fiber length (mm) | Fiber length at maximum frequency peak (mm) | Fiber length at second peak (mm) | Strength | Gas barrier properties |
| | | | | | | - | - |
| Ex. 1-1 | 120 | 28.9 | 0.91 | 0.975 | 0.125 | Δ | ⓞ |
| Ex. 1-2 | 210 | 28.9 | 0.91 | 0.975 | 0.825 | Δ | Δ |
| Ex. 1-3 | 135 | 36.4 | 0.95 | 0.975 | 0.125 | ∘ | ∘ |
| Ex. 1-4 | 200 | 36.4 | 0.95 | 0.975 | 0.725 | ∘ | Δ |
| Ex. 1-5 | 160 | 42.3 | 1.01 | 0.975 | 0.125 | ⓞ | ∘ |
| Comp.Ex. 1-1 | 120 (modified method) | 18.4 | 0.62 | 0.125 | nil | X | ⓞ |
| Comp.Ex. 1-2 | 200 | 54.4 | 1.65 | 1.555 | 0.125 | ⓞ | X |
| Comp.Ex. 1-3 | 320 | 73.1 | 1.88 | 2.315 | 0.255 | ⓞ | X |
| Comp.Ex. 1-4 | 510 | 77.1 | 1.98 | 2.355 | 2.505 | ⓞ | X |

| | | | | | | | |
|---|---|---|---|---|---|---|---|
| Ex.: Example, Comp.Ex.: Comparative Example | | | | | | | |

It is understood from the evaluation results of Table 1 that the total heat exchanging element paper characterized in that the substrate sheet contains natural pulp having an average fiber length of 0.7 to 1.7 mm, the natural pulp has a maximum frequency peak between 0.5 mm and 1.5 mm in the fiber length histogram and the percentage of fibers having a fiber length of 1.0 mm or more is 20 % or more is excellent in strength and gas barrier properties. It is understood from Comparative Example 1-1 that when the percentage of fibers having a fiber length of 1.0 mm or more is smaller than 20 %, strength is not obtained. It is further understood from Comparative Examples 1-2 to 1-4 that when the average fiber length is larger than 1.7 mm and/or when the fiber length at the maximum frequency peak does not fall within a range of 0.5 to 1.5 mm, gas barrier properties are not obtained. It is understood that Example 1-1, Example 1-3 and Example 1-5 all having a second peak at a range of 0.0 to 0.5 mm have higher gas barrier properties than Example 1-2 and Example 1-4 having no second peak.

### (Examples 2-1 to 2-8, Comparative Examples 2-1 to 2-3)

After NBKP was dissociated to a concentration of 3 %, a total heat exchanging element paper was obtained in the same manner as in Example 1-1 except that natural pulp having physical property values shown in Table 2 was adjusted by using a double disk refiner and a deluxe finer.

**[Table 2]**

| | Physical property value of natural pulp | | | | | Evaluation of total heat exchanging element paper | |
|---|---|---|---|---|---|---|---|
| | Freeness (ml) | Percentage of fibers having a fiber length of 1.0mm or more (%) | Average fiber length (mm) | Fiber length at maximum frequency peak (mm) | Inclination of percentage | Strength | Gas barrier properties |
| | | | | | - | - | - |
| Ex. 2-1 | 210 | 23.7 | 0.79 | 0.625 | -1.50 | Δ | ∘ |
| Ex. 2-2 | 210 | 28.9 | 0.91 | 0.975 | -2.10 | Δ | Δ |
| Ex. 2-3 | 175 | 29.5 | 0.92 | 0.775 | -1.10 | ∘ | Δ |
| Ex. 2-4 | 185 | 29.5 | 0.92 | 0.775 | -2.10 | ⓞ | ⓞ |
| Ex. 2-5 | 180 | 29.5 | 0.92 | 0.775 | -2.85 | Δ | ∘ |
| Ex. 2-6 | 160 | 42.3 | 1.01 | 0.975 | -2.80 | ⓞ | Δ |
| Ex. 2-7 | 155 | 44.6 | 1.29 | 0.775 | -2.25 | ∘ | Δ |
| Ex. 2-8 | 240 | 52.6 | 1.58 | 0.875 | -1.75 | ⓞ | Δ |
| Comp.Ex. 2-1 | 120 | 18.4 | 0.62 | 0.125 | -1.50 | X | ⓞ |
| Comp.Ex. 2-2 | 320 | 73.1 | 1.88 | 2.315 | -0.10 | ⓞ | X |
| Comp.Ex. 2-3 | 510 | 77.1 | 1.98 | 2.355 | -0.20 | ⓞ | X |

| | | | | | | | |
|---|---|---|---|---|---|---|---|
| Ex.: Example, Comp.Ex.: Comparative Example | | | | | | | |

It is understood from the evaluation results of Table 2 that the total heat exchanging element papers of Examples 2-1 to 2-8 characterized in that the average fiber length of the natural pulp is 0.7 to 1.7 mm, the natural pulp has a maximum frequency peak between 0.5 mm and 1.5 mm in the fiber length histogram, the percentage of fibers having a fiber length of 1.0 mm or more is 20 % or more and the inclination of percentage is -3.0 to -1.0 are excellent in strength and gas barrier properties. In contrast to this, it is understood that the total heat exchanging element paper of Comparative Example 2-1 does not obtain strength as the percentage of fibers having a fiber length of 1.0 mm or more is smaller than 20 %. It is also understood that the total heat exchanging element papers of Comparative Examples 2-2 and 2-3 do not obtain gas barrier properties as the average fiber length is larger than 1.7 mm and the fiber length at the maximum frequency peak does not fall within a range of 0.5 to 1.5 mm.

### (Examples 3-1 to 3-10, Comparative Examples 3-1 to 3-4)

After NBKP was dissociated to a concentration of 3 %, natural pulp having physical property values shown in Table 3 was obtained by using a double disk refiner and a deluxe finer. Thereafter, a raw fabric for a substrate sheet having a weight of 40 g/m² was manufactured with a fourdrinier papermaking machine. Further, the raw fabric was impregnated with the SNOWTEX (registered trademark) AK (manufactured by Nissan Chemical Industries, Ltd.) as colloidal silica in a ratio shown in Table 3 by a nip coater at a speed of 60 m/min and a nip pressure of 343 kPa and dried to manufacture a substrate sheet. Thereafter, the substrate sheet was impregnated with 5 g/m² of calcium chloride as a moisture absorbent and dried to obtain a total heat exchanging element paper.

### [Table 3]

**[Table 3]-1**

| | Physical property value of natural pulp | | | | |
|---|---|---|---|---|---|
| | Freeness (ml) | Percentage of fibers having a fiber length of 1.0mm or more (%) | Average fiber length (mm) | Fiber length at maximum frequency peak (mm) | Fiber length at second peak (mm) |
| Ex.3-1 | 120 | 28.9 | 0.91 | 0.975 | 0.125 |
| Ex.3-2 | 210 | 28.9 | 0.91 | 0.975 | 0.825 |
| Ex.3-3 | 135 | 36.4 | 0.95 | 0.975 | 0.125 |
| Ex.3-4 | 200 | 36.4 | 0.95 | 0.975 | 0.725 |
| Ex.3-5 | 160 | 42.3 | 1.01 | 0.975 | 0.125 |
| Ex.3-6 | 160 | 42.3 | 1.01 | 0.975 | 0.125 |
| Ex.3-7 | 160 | 42.3 | 1.01 | 0.975 | 0.125 |
| Ex.3-8 | 160 | 42.3 | 1.01 | 0.975 | 0.125 |
| Ex.3-9 | 160 | 42.3 | 1.01 | 0.975 | 0.125 |
| Ex.3-10 | 160 | 42.3 | 1.01 | 0.975 | 0.125 |
| C.Ex. 3-1 | 120 (modified method) | 18.4 | 0.62 | 0.125 | nil |
| C.Ex. 3-2 | 200 | 54.4 | 1.65 | 1.555 | 0.125 |
| C.Ex. 3-3 | 320 | 73.1 | 1.88 | 2.315 | 0.255 |
| C.Ex. 3-4 | 510 | 77.1 | 1.98 | 2.355 | 2.505 |

| | | | | | |
|---|---|---|---|---|---|
| Ex.: Example, C.Ex.: Comparative Example | | | | | |

**[Table 3]-2**

| | Content in substrate sheet | | Evaluation of total heat exchanging element paper | | |
|---|---|---|---|---|---|
| | Natural Pulp (%) | Colloidal silica (%) | Strength | Gas barrier properties | Moisture resistance |
| Ex.3-1 | 90.0 | 10.0 | Δ | ⓞ | ∘ |
| Ex.3-2 | 90.0 | 10.0 | Δ | Δ | ∘ |
| Ex.3-3 | 90.0 | 10.0 | ∘ | ∘ | ∘ |
| Ex.3-4 | 90.0 | 10.0 | ∘ | Δ | ∘ |
| Ex.3-5 | 99.8 | 0.2 | ⓞ | ⓞ | Δ |
| Ex.3-6 | 99.0 | 1.0 | ⓞ | ⓞ | Δ |
| Ex.3-7 | 95.0 | 5.0 | ∘ | ∘ | ∘ |
| Ex.3-8 | 90.0 | 10.0 | ∘ | ∘ | ⓞ |
| Ex.3-9 | 80.0 | 20.0 | Δ | Δ | ⓞ |
| Ex. 3-10 | 99.9 | 0.1 | ⓞ | ⓞ | X |
| C.Ex. 3-1 | 90.0 | 10.0 | X | ⓞ | ∘ |
| C.Ex. 3-2 | 90.0 | 10.0 | ⓞ | X | ∘ |
| C.Ex. 3-3 | 90.0 | 10.0 | ⓞ | X | ∘ |
| C.Ex. 3-4 | 90.0 | 10.0 | ⓞ | X | ∘ |

| | | | | | |
|---|---|---|---|---|---|
| Ex.: Example, C.Ex.: Comparative Example | | | | | |

It is understood from the evaluation results of Table 3 that the total heat exchanging element paper characterized in that the length-weighted average fiber length of the natural pulp is 0.7 to 1.7 mm, the natural pulp has a maximum frequency peak between 0.5 mm and 1.5 mm in the fiber length histogram, the percentage of fibers having a fiber length of 1.0 mm or more is 20 % or more and the substrate sheet contains colloidal silica is excellent in strength, gas barrier properties and moisture resistance. It is also understood from Comparative Example 3-1 that when the percentage of fibers having a fiber length of 1.0 mm or more is smaller than 20 %, strength is not obtained. It is further understood from Comparative Examples 3-2 to 3-4 that when the average fiber length is larger than 1.7 mm and/or when the fiber length at the maximum frequency peak does not fall within a range of 0.5 to 1.5 mm, gas barrier properties are not obtained.

Examples 3-1 and Example 3-3 having a second peak at a fiber length of 0.0 to 0.5 mm have higher gas barrier properties than Example 3-2 and Example 3-4 having no second peak. In Examples 3-5 to 3-9, moisture resistance is improved by containing colloidal silica. Example 3-10 having a content of colloidal silica of 0.1 mass% has a small effect of improving moisture resistance but is excellent in strength and gas barrier properties.

### (Examples 4-1 to 4-9, Comparative Examples 4-1 to 4-4)

After NBKP was dissociated to a concentration of 3 %. natural pulp having physical property values shown in Table 4 was obtained by using a double disk refiner and a deluxe finer. Thereafter, a raw fabric for a substrate sheet having a weight of 40 g/m² was manufactured with a fourdrinier papermaking machine. Further, the raw fabric was impregnated with sodium polystyrene sulfonate in a ratio shown in Table 4 by a nip coater at a speed of 60 m/min and a nip pressure of 343 kPa and dried to manufacture a substrate sheet. Thereafter, the substrate sheet was impregnated with 5 g/m² of calcium chloride as a moisture absorbent and dried to obtain a total heat exchanging element paper.

### [moisture permeability: method of evaluating moisture permeability]

A value obtained by multiplying by 8 a value obtained by measuring with a moisture permeability testing method specified in JIS Z 0208:1976 after the total heat exchanging element paper was left at a temperature of 23°C and a relative humidity of 50 % for 3 hours was taken as moisture permeability which is a value for 24 hours. In general, the moisture permeability should be 300 g/m²·24 hr or more but the minimum criterion is set to 500 g/m²·24 hr to clarify the effect of the present invention. The evaluation criteria are given below.

ⓞ: Moisture permeability is 1,200 g/m²·24 hr or more.
∘: Moisture permeability is 800 g/m²·24 hr or more and less than 1,200 g/m²·24 hr.
△: Moisture permeability is 500 g/m²·24 hr or more and less than 800 g/m²·24 hr.
x: Moisture permeability is less than 500 g/m²·24 hr.

### [Table 4]

**[Table 4]-1**

| | Physical property value of natural pulp | | | | |
|---|---|---|---|---|---|
| | Freeness (ml) | Percentage of fibers having a fiber length of 1.0mm or more (%) | Average fiber length (mm) | Fiber length at maximum frequency peak (mm) | Fiber length at second peak (mm) |
| Ex.4-1 | 120 | 28.9 | 0.91 | 0.975 | 0.125 |
| Ex.4-2 | 210 | 28.9 | 0.91 | 0.975 | 0.825 |
| Ex.4-3 | 135 | 36.4 | 0.95 | 0.975 | 0.125 |
| Ex.4-4 | 200 | 36.4 | 0.95 | 0.975 | 0.725 |
| Ex.4-5 | 160 | 42.3 | 1.01 | 0.975 | 0.125 |
| Ex.4-6 | 160 | 42.3 | 1.01 | 0.975 | 0.125 |
| Ex.4-7 | 160 | 42.3 | 1.01 | 0.975 | 0.125 |
| Ex.4-8 | 160 | 42.3 | 1.01 | 0.975 | 0.125 |
| Ex.4-9 | 160 | 42.3 | 1.01 | 0.975 | 0.125 |
| C.Ex. 4-1 | 120 (modified method) | 18.4 | 0.62 | 0.125 | nil |
| C.Ex. 4-2 | 200 | 54.4 | 1.65 | 1.555 | 0.125 |
| C.Ex. 4-3 | 320 | 73.1 | 1.88 | 2.315 | 0.255 |
| C.Ex. 4-4 | 510 | 77.1 | 1.98 | 2.355 | 2.505 |

| | | | | | |
|---|---|---|---|---|---|
| Ex.: Example, C.Ex.: Comparative Example | | | | | |

**[Table 4]-2**

| | Content in substrate sheet | | Evaluation of total heat exchanging element paper | | |
|---|---|---|---|---|---|
| | Natural Pulp (%) | Polystyrene sulfonic acid (%) | Strength | Gas barrier properties - | Moisture resistance |
| Ex.4-1 | 95.0 | 5.0 | Δ | ⓞ | ∘ |
| Ex.4-2 | 95.0 | 5.0 | Δ | Δ | ∘ |
| Ex.4-3 | 95.0 | 5.0 | ∘ | ∘ | ∘ |
| Ex.4-4 | 95.0 | 5.0 | ∘ | Δ | ∘ |
| Ex.4-5 | 99.9 | 0.1 | ⓞ | ⓞ | Δ |
| Ex.4-6 | 99.0 | 1.0 | ⓞ | ⓞ | Δ |
| Ex.4-7 | 95.0 | 5.0 | ∘ | ∘ | ∘ |
| Ex.4-8 | 90.0 | 10.0 | Δ | Δ | ⓞ |
| Ex.4-9 | 100.0 | 0.0 | ⓞ | ⓞ | X |
| C.Ex. 4-1 | 95.0 | 5.0 | X | ⓞ | ∘ |
| C.Ex. 4-2 | 95.0 | 5.0 | ⓞ | X | ∘ |
| C.Ex. 4-3 | 95.0 | 5.0 | ⓞ | X | ∘ |
| C.Ex. 4-4 | 95.0 | 5.0 | ⓞ | X | ∘ |

| | | | | | |
|---|---|---|---|---|---|
| Ex.: Example, C.Ex.: Comparative Example | | | | | |

It is understood from the evaluation results of Table 4 that the total heat exchanging element paper characterized in that the average fiber length of the natural pulp is 0.7 to 1.7 mm, the natural pulp has a maximum frequency peak between 0.5 mm and 1.5 mm in the fiber length histogram, the percentage of fibers having a fiber length of 1.0 mm or more is 20 % or more and the substrate sheet contains polystyrene sulfonic acid or a salt thereof and the natural pulp is excellent in strength, gas barrier properties and moisture permeability. It is understood from Comparative Example 4-1 that when the percentage of fibers having a fiber length of 1.0 mm or more is smaller than 20 %, strength is not obtained. Further, it is understood from Comparative Examples 4-2 to 4-4 that when the average fiber length is larger than 1.7 mm and/or when the fiber length at the maximum frequency peak does not fall within a range of 0.5 to 1.5 mm, gas barrier properties are not obtained.

It is understood that Examples 4-1 and Example 4-3 having a second peak at a range of 0.0 to 0.5 mm have higher gas barrier properties than Example 4-2 and Example 4-4 having no second peak. It is also understood from Examples 4-5 to 4-8 that moisture permeability is improved by adding sodium polystyrene sulfonate. In Example 4-9 in which sodium polystyrene sulfonate is not contained, the effect of improving moisture permeability is small but strength and gas barrier properties are excellent.

### (Examples 5-1 to 5-6, 5-8 to 5-12, Comparative Examples 5-1 to 5-6)

After NBKP was dissociated to a concentration of 3 %, natural pulp having physical property values shown in Table 5 was obtained by using a double disk refiner and a deluxe finer. Thereafter, a substrate sheet for total heat exchanging element papers having a weight of 40 g/m² was manufactured with a fourdrinier papermaking machine. Further, the substrate sheet was impregnated with 5 g/m² of calcium chloride as a moisture absorbent by a nip coater at a speed of 60 m/min and a nip pressure of 343 kPa and dried to obtain a paper 1.

Alumina sol 1 (trade name: ALUMINA SOL 200, manufactured by Nissan Chemical Industries, Ltd.) was applied to the paper 1 to ensure that its content became a value shown in Table 5 and dried at 120°C for 3 minutes to obtain a total heat exchanging element paper. In Example 5-12 and Comparative Examples 5-1 and 5-3, the alumina sol was not applied.

### (Example 5-7)

Alumina sol 2 (trade name: ALUMINA SOL 520-A, manufactured by Nissan Chemical Industries, Ltd.) was applied to the paper 1 to ensure that its content became 1 g/m² and dried at 120°C for 3 minutes to obtain a total heat exchanging element paper.

### [Table 5]

**[Table 5]-1**

| | Total heat exchanging element paper | | | | |
|---|---|---|---|---|---|
| | Physical property value of natural pulp | | | | |
| | Freeness (ml) | Percentage of fibers having a fiber length of 1.0mm or more (%) | Average fiber length (mm) | Fiber length at maximum frequency peak (mm) | Fiber length at second peak (mm) |
| Ex.5-1 | 160 | 42.3 | 1.01 | 0.975 | 0.125 |
| Ex.5-2 | 160 | 42.3 | 1.01 | 0.975 | 0.125 |
| Ex.5-3 | 160 | 42.3 | 1.01 | 0.975 | 0.125 |
| Ex.5-4 | 160 | 42.3 | 1.01 | 0.975 | 0.125 |
| Ex.5-5 | 160 | 42.3 | 1.01 | 0.975 | 0.125 |
| Ex.5-6 | 160 | 42.3 | 1.01 | 0.975 | 0.125 |
| Ex.5-7 | 160 | 42.3 | 1.01 | 0.975 | 0.125 |
| Ex.5-8 | 120 | 28.9 | 0.91 | 0.975 | 0.125 |
| Ex.5-9 | 210 | 28.9 | 0.91 | 0.975 | 0.825 |
| Ex.5-10 | 135 | 36.4 | 0.95 | 0.975 | 0.125 |
| Ex.5-11 | 200 | 36.4 | 0.95 | 0.975 | 0.725 |
| Ex.5-12 | 160 | 42.3 | 1.01 | 0.975 | 0.125 |
| C.Ex. 5-1 | 120 (modified method) | 18.4 | 0.62 | 0.125 | nil |
| C.Ex. 5-2 | 120 (modified method) | 18.4 | 0.62 | 1.125 | nil |
| C.Ex. 5-3 | 200 | 54.4 | 1.65 | 1.555 | 0.125 |
| C.Ex. 5-4 | 200 | 54.4 | 1.65 | 1.555 | 0.125 |
| C.Ex. 5-5 | 320 | 73.1 | 1.88 | 2.315 | 0.255 |
| C.Ex. 5-6 | 510 | 77.1 | 1.98 | 2.355 | 2.505 |

| | | | | | |
|---|---|---|---|---|---|
| Ex.: Example, C.Ex.: Comparative Example | | | | | |

**[Table 5]-2**

| | Total heat exchanging element paper | | Evaluation of total heat exchanging element paper | | |
|---|---|---|---|---|---|
| | | Alumina sol | | | |
| | | Contents (g/m²) | Strength | Gas barrier properties | Moisture resistance |
| Ex.5-1 | 1 | 1 | ⓞ | ∘ | ∘ - ⓞ |
| Ex.5-2 | 1 | 2 | ⓞ | ∘ | ∘ - ⓞ |
| Ex.5-3 | 1 | 5 | ⓞ | ∘ | ∘ - ⓞ |
| Ex.5-4 | 1 | 10 | ⓞ | ∘ | ⓞ |
| Ex.5-5 | 1 | 0.5 | ⓞ | ∘ | Δ - ∘ |
| Ex.5-6 | 1 | 0.3 | ⓞ | ∘ | Δ |
| Ex.5-7 | 2 | 1 | ⓞ | ∘ | ∘ - ⓞ |
| Ex.5-8 | 1 | 1 | Δ | ⓞ | ∘ - ⓞ |
| Ex.5-9 | 1 | 1 | Δ | Δ | ∘ - ⓞ |
| Ex.5-10 | 1 | 1 | ∘ | ∘ | ∘ - ⓞ |
| Ex.5-11 | 1 | 1 | ∘ | Δ | ∘ - ⓞ |
| Ex.5-12 | - | - | ⓞ | ∘ | X - Δ |
| C.Ex. 5-1 | - | - | X | ⓞ | X -Δ |
| C.Ex. 5-2 | 1 | 1 | X | ⓞ | ∘ - ⓞ |
| C.Ex. 5-3 | - | - | ⓞ | X | X - Δ |
| C.Ex. 5-4 | 1 | 1 | ⓞ | X | ∘ - ⓞ |
| C.Ex. 5-5 | 1 | 1 | ⓞ | X | ∘ - ⓞ |
| C.Ex. 5-6 | 1 | 1 | ⓞ | X | ∘ - ⓞ |

| | | | | | |
|---|---|---|---|---|---|
| Ex.: Example, C.Ex.: Comparative Example | | | | | |

It is understood from the evaluation results of Table 5 that the total heat exchanging element paper including a substrate sheet which contains natural pulp having an average fiber length of 0.7 to 1.7 mm, a maximum frequency peak between 0.5 mm and 1.5 mm in the fiber length histogram and a percentage of fibers having a fiber length of 1.0 mm or more of 20 % or more and containing alumina sol is excellent in strength, gas barrier properties and moisture resistance. It is also understood that the moisture resistance of the total heat exchanging element is improved according to the content of the alumina sol 1 in the total heat exchanging element papers of Examples 5-1 to 5-6 though the content of the alumina sol 1 is changed.

It is understood from Comparative Examples 5-1 and 5-2 that when the percentage of fibers having a fiber length of 1.0 mm or more is smaller than 20 %, strength is not obtained. Further, it is understood from Comparative Examples 5-3 to 5-6 that when the average fiber length is larger than 1.7 mm and/or when the fiber length at the maximum frequency peak does not fall within a range of 0.5 to 1.5 mm, gas barrier properties are not obtained.

The total heat exchanging element papers of Examples 5-8, Example 5-10 and Example 5-1 having a second peak at a range of 0.0 to 0.5 mm have higher gas barrier properties than the total heat exchanging element papers of Example 5-9 and Example 5-11 having no second peak at a range of 0.0 to 0.5 mm.

### (Examples 6-1 to 6-14, Comparative Examples 6-1 to 6-8)

After NBKP was dissociated to a concentration of 3 %, natural pulp having physical property values shown in Table 6 was obtained by using a double disk refiner and a deluxe finer. Thereafter, a substrate sheet I having a weight of 40 g/m² was manufactured with a fourdrinier papermaking machine. An aqueous solution containing 20 mass% of polyvinyl alcohol was applied to this substrate sheet I with a rod bar to ensure that its content became a value shown in Table 6 after drying and dried at 120°C for 3 minutes to obtain a paper. In Examples 6-11 and Comparative Examples 6-1 and 6-3, polyvinyl alcohol was not applied.

A solution containing 35 mass% of calcium chloride (manufactured by Tokuyama Corporation) was applied to the paper with a rod bar to ensure that the content of calcium chloride became 5 g/m² after drying and dried at 120°C for 3 minutes to obtain a total heat exchanging element paper.

Trade name: KURARAY POVAL (registered trademark) 5-74: manufactured by Kuraray Co., Ltd., saponification degree of 72.5 to 74.5 mol%, polymerization degree of 500) Trade name: KURARAY POVAL (registered trademark) 3-88: manufactured by Kuraray Co., Ltd., saponification degree of 87.0 to 89.0 mol%, polymerization degree of 300) Trade name: KURARAY POVAL (registered trademark) 3-98: manufactured by Kuraray Co., Ltd., saponification degree of 98.0 to 99.0 mol%, polymerization degree of 300) Trade name: KURARAY POVAL (registered trademark) LM-10HD: manufactured by Kuraray Co., Ltd.. saponification degree of 38.0 to 42.0 mol%, polymerization degree of 1,000)

### (method of evaluating heat exchange efficiency)

A heat exchange efficiency test was conducted on the manufactured total heat exchanging elements according to JIS B8628:2003. The heat exchange efficiencies of the total heat exchanging elements of Examples 6-1 to 6-10 and 6-12 to 6-14 and Comparative Examples 6-1 to 6-8 were evaluated as compared with the heat exchange efficiency of the total heat exchanging element of Example 6-11 based on the following evaluation criteria.

- 1:: much lower
- 2:: lower
- 3:: same
- 3:: higher
- 5:: much higher

### [Table 6]

**[Table 6]-1**

| | Total heat exchanging element paper | | | | |
|---|---|---|---|---|---|
| | Physical property value of natural pulp | | | | |
| | Freeness (ml) | Percentage of fibers having a fiber length of 1.0mm or more (%) | Average fiber length (mm) | Fiber length at maximum frequency peak (mm) | Fiber length at second peak (mm) |
| Ex.6-1 | 160 | 42.3 | 1.01 | 0.975 | 0.125 |
| Ex.6-2 | 160 | 42.3 | 1.01 | 0.975 | 0.125 |
| Ex.6-3 | 160 | 42.3 | 1.01 | 0.975 | 0.125 |
| Ex.6-4 | 160 | 42.3 | 1.01 | 0.975 | 0.125 |
| Ex.6-5 | 160 | 42.3 | 1.01 | 0.975 | 0.125 |
| Ex.6-6 | 160 | 42.3 | 1.01 | 0.975 | 0.125 |
| Ex.6-7 | 120 | 28.9 | 0.91 | 0.975 | 0.125 |
| Ex.6-8 | 210 | 28.9 | 0.91 | 0.975 | 0.825 |
| Ex.6-9 | 135 | 36.4 | 0.95 | 0.975 | 0.125 |
| Ex.6-10 | 200 | 36.4 | 0.95 | 0.975 | 0.725 |
| Ex.6-11 | 160 | 42.3 | 1.01 | 0.975 | 0.125 |
| Ex.6-12 | 160 | 42.3 | 1.01 | 0.975 | 0.125 |
| Ex.6-13 | 160 | 42.3 | 1.01 | 0.975 | 0.125 |
| Ex.6-14 | 160 | 42.3 | 1.01 | 0.975 | 0.125 |
| C.Ex. 6-1 | 120 (modified method) | 18.4 | 0.62 | 0.125 | nil |
| C.Ex. 6-2 | 120 (modified method) | 18.4 | 0.62 | 0.125 | nil |
| C.Ex. 6-3 | 200 | 54.4 | 1.65 | 1.555 | 0.125 |
| C.Ex. 6-4 | 200 | 54.4 | 1.65 | 1.555 | 0.125 |
| C.Ex. 6-5 | 120 (modified method) | 18.4 | 0.62 | 0.125 | nil |
| C.Ex. 6-6 | 200 | 54.4 | 1.65 | 1.555 | 0.125 |
| C.Ex. 6-7 | 320 | 73.1 | 1.88 | 2.315 | 0.255 |
| C.Ex. 6-8 | 510 | 77.1 | 1.98 | 2.355 | 2.505 |

| | | | | | |
|---|---|---|---|---|---|
| Ex.: Example, C.Ex.: Comparative Example | | | | | |

**[Table 6]-2**

| | Total heat exchanging element paper | | Eva-A | | Eva-B |
|---|---|---|---|---|---|
| | Polyvinyl Alcohol | | | | |
| | Trade name (Saponification degree mol %) | Cont. (g/m²) | Str. - | Gbp. - | Hee. compared with Ex.6-11 |
| Ex.6-1 | KURARAY POVAL 5-74 (72.5 - 74.5) | 1 | ⓞ | ∘ | 4 |
| Ex.6-2 | KURARAY POVAL 5-74 (72.5 - 74.5) | 2 | ⓞ | ∘ | 4 - 5 |
| Ex.6-3 | KURARAY POVAL 5-74 (72.5 - 74.5) | 5 | ⓞ | ∘ | 4 - 5 |
| Ex.6-4 | KURARAY POVAL 5-74 (72.5 - 74.5) | 10 | ⓞ | ∘ | 5 |
| Ex.6-5 | KURARAY POVAL 5-74 (72.5 - 74.5) | 0.5 | ⓞ | ∘ | 3 - 4 |
| Ex.6-6 | KURARAY POVAL 5-74 (72.5 - 74.5) | 0.3 | ⓞ | ∘ | 3 |
| Ex.6-7 | KURARAY POVAL 5-74 (72.5 - 74.5) | 1 | Δ | ⓞ | 4 |
| Ex.6-8 | KURARAY POVAL 5-74 (72.5 - 74.5) | 1 | Δ | Δ | 4 |
| Ex.6-9 | KURARAY POVAL 5-74 (72.5 - 74.5) | 1 | ∘ | ∘ | 4 |
| Ex.6-10 | KURARAY POVAL 5-74 (72.5 - 74.5) | 1 | ∘ | Δ | 4 |
| Ex.6-11 | - | - | ⓞ | ∘ | - |
| Ex.6-12 | KURARAY POVAL 3-88 (87.0 - 89.0) | 1 | ⓞ | ∘ | 3 |
| Ex.6-13 | KURARAY POVAL 3-98 (98.0 - 99.0) | 1 | ⓞ | ∘ | 3 |
| Ex.6-14 | KURARAY POVAL LM-10HD (38.0 - 42.0) | 1 | ⓞ | ∘ | 3 |

| | | | | | |
|---|---|---|---|---|---|
| Ex.: Example; Eva-A: Evaluation of total heat exchange element paper; Eva-B: Evaluation of total heat exchange element; Cont.: Content(s); Str.: Strength; Gbp.: Gas barrier properties; Hee.: Heat exchange efficiency | | | | | |

**[Table 6]-3**

| | Total heat exchanging element paper | | Eva-A | | Eva-B |
|---|---|---|---|---|---|
| | Polyvinyl Alcohol | | | | |
| | Trade name (Saponification degree mol %) | Cont. (g/m²) | Str. - | Gbp. - | Hee. compared with Ex.6-11 |
| C.Ex. 6-1 | - | - | X | ⓞ | 1 - 2 |
| C.Ex. 6-2 | KURARAY POVAL 3-88 (87.0 - 89.0) | 1 | X | ⓞ | 3 |
| C.Ex. 6-3 | - | - | ⓞ | X | 1 - 2 |
| C.Ex. 6-4 | KURARAY POVAL 3-88 (87.0 - 89.0) | 1 | ⓞ | X | 3 |
| C.Ex. 6-5 | KURARAY POVAL 5-74 (72.5 - 74.5) | 1 | X | ⓞ | 4 - 5 |
| C.Ex. 6-6 | KURARAY POVAL 5-74 (72.5 - 74.5) | 1 | ⓞ | X | 4 - 5 |
| C.Ex. 6-7 | KURARAY POVAL 5-74 (72.5 - 74.5) | 1 | ⓞ | X | 4 - 5 |
| C.Ex. 6-8 | KURARAY POVAL 5-74 (72.5 - 74.5) | 1 | ⓞ | X | 4 - 5 |

| | | | | | |
|---|---|---|---|---|---|
| C.Ex.: Comparative Example; Eva-A: Evaluation of total heat exchange element paper; Eva-B: Evaluation of total heat exchange element; Cont.: Content(s); Str.: Strength; Gbp.: Gas barrier properties; Hee.: Heat exchange efficiency | | | | | |

It is understood from the evaluation results of Table 6 that the total heat exchanging element paper including a substrate sheet which contains natural pulp having an average fiber length of 0.7 to 1.7 mm, a maximum frequency peak between 0.5 mm and 1.5 mm in the fiber length histogram and a percentage of fibers having a fiber length of 1.0 mm or more of 20 % or more and containing polyvinyl alcohol having a saponification degree of 60 to 85 mol% is excellent in strength, gas barrier properties and heat exchange efficiency.

It is also understood from Comparative Examples 6-1, 6-2 and 6-5 that when the percentage of fibers having a fiber length of 1.0 mm or more is smaller than 20 %, strength is not obtained. Further, it is understood from Comparative Example 6-3, 6-4 and 6-6 to 6-8 that when the average fiber length is larger than 1.7 mm and/or when the fiber length at the maximum frequency peak does not fall within a range of 0.5 to 1.5 mm, gas barrier properties are not obtained.

It is understood that the total heat exchanging element papers of Example 6-7, Example 6-9 and Example 6-1 having a second peak at a range of 0.0 to 0.5 mm have higher gas barrier properties than the total heat exchanging element papers of Example 6-8 and Example 6-10 having no second peak at a range of 0.0 to 0.5 mm.

It is understood from comparison between Examples 6-1 to 6-6 and Example 6-11 that when the polyvinyl alcohol having a saponification degree of 60 to 85 mol% is contained in the total heat exchanging element paper, the heat exchange efficiency of the total heat exchanging element is improved. Although the total heat exchanging element paper containing polyvinyl alcohol having a saponification degree of 60 to 85 mol% whose content has been changed is used in the total heat exchanging elements of Examples 6-1 to 6-6, the heat exchange efficiency of each of the total heat exchange elements is improved according to the content of the polyvinyl alcohol and the heat exchange efficiency of the total heat exchanging element of Example 6-4 reaches saturation. It is understood from Examples 6-1 to 6-6 that the content of the polyvinyl alcohol having a saponification degree of 60 to 85 mol% is preferably 0.5 to 10 g/m².

It is understood from comparison between Example 6-1 and Examples 6-12 to 6-14 that Example 6-1 in which the polyvinyl alcohol having a saponification degree of 60 to 85 mol% is contained in the total heat exchanging element paper is superior in the heat exchange efficiency of the total heat exchanging element to Examples 6-12 to 6-14 in which polyvinyl alcohol whose saponification degree is not 60 to 85 mol% is contained.

### (Examples 7-1 to 7-10, Comparative Examples 7-1 to 7-4)

After NBKP was dissociated to a concentration of 3 %, natural pulp having physical property values shown in Table 7 was obtained by using a double disk refiner and a deluxe finer. Thereafter, a raw fabric for a substrate sheet having a weight of 45 g/m² was manufactured with a fourdrinier papermaking machine. Further, the raw fabric was impregnated with AEROSIL (registered trademark) MOX-80 (manufactured by Nippon Aerosil Co., Ltd.) as dry silica fine particles by a nip coater at a speed of 60 m/min and a nip pressure of 350 kPa to ensure that its content became a value shown in Table 7 so as to manufacture a substrate sheet. Thereafter, the substrate sheet was impregnated with 6 g/m² of calcium chloride as a moisture absorber and dried to obtain a total heat exchanging element paper.

**[Table 7]-1**

| | Physical property value of natural pulp | | | | |
|---|---|---|---|---|---|
| | Freeness (ml) | Percentage of fibers having a fiber length of 1.0mm or more (%) | Average fiber length (mm) | Fiber length at maximum frequency peak (mm) | Fiber length at second peak (mm) |
| Ex.7-1 | 120 | 28.9 | 0.91 | 0.975 | 0.125 |
| Ex.7-2 | 210 | 28.9 | 0.91 | 0.975 | 0.825 |
| Ex.7-3 | 135 | 36.4 | 0.95 | 0.975 | 0.125 |
| Ex.7-4 | 200 | 36.4 | 0.95 | 0.975 | 0.725 |
| Ex.7-5 | 160 | 42.3 | 1.01 | 0.975 | 0.125 |
| Ex.7-6 | 160 | 42.3 | 1.01 | 0.975 | 0.125 |
| Ex.7-7 | 160 | 42.3 | 1.01 | 0.975 | 0.125 |
| Ex.7-8 | 160 | 42.3 | 1.01 | 0.975 | 0.125 |
| Ex.7-9 | 160 | 42.3 | 1.01 | 0.975 | 0.125 |
| Ex.7-10 | 160 | 42.3 | 1.01 | 0.975 | 0.125 |
| C.Ex. 7-1 | 120 (modified method) | 18.4 | 0.62 | 0.125 | nil |
| C.Ex. 7-2 | 200 | 54.4 | 1.65 | 1.555 | 0.125 |
| C.Ex. 7-3 | 320 | 73.1 | 1.88 | 2.315 | 0.255 |
| C.Ex. 7-4 | 510 | 77.1 | 1.98 | 2.355 | 2.505 |

| | | | | | |
|---|---|---|---|---|---|
| Ex.: Example, C.Ex.: Comparative Example | | | | | |

**[Table 7]-2**

| | Content in substrate sheet | | Evaluation of total heat exchanging element paper | | |
|---|---|---|---|---|---|
| | Natural Pulp (%) | Dry silica (%) | Strength | Gas barrier properties | Moisture resistance |
| Ex.7-1 | 88.0 | 12.0 | Δ | ⓞ | ∘ |
| Ex.7-2 | 88.0 | 12.0 | Δ | Δ | ∘ |
| Ex.7-3 | 88.0 | 12.0 | ∘ | ∘ | ∘ |
| Ex.7-4 | 88.0 | 12.0 | ∘ | Δ | ∘ |
| Ex.7-5 | 99.5 | 0.5 | ⓞ | ⓞ | Δ |
| Ex.7-6 | 99.0 | 1.0 | ⓞ | ⓞ | Δ |
| Ex.7-7 | 95.0 | 5.0 | ∘ | ∘ | ∘ |
| Ex.7-8 | 88.0 | 12.0 | ∘ | ∘ | ⓞ |
| Ex.7-9 | 75.0 | 25.0 | Δ | Δ | ⓞ |
| Ex.7-10 | 99.7 | 0.3 | ⓞ | ⓞ | X |
| C.Ex. 7-1 | 88.0 | 12.0 | X | ⓞ | ∘ |
| C.Ex. 7-2 | 88.0 | 12.0 | ⓞ | X | ∘ |
| C.Ex. 7-3 | 88.0 | 12.0 | ⓞ | X | ∘ |
| C.Ex. 7-4 | 88.0 | 12.0 | ⓞ | X | ∘ |

| | | | | | |
|---|---|---|---|---|---|
| Ex.: Example, C.Ex.: Comparative Example | | | | | |

It is understood from the evaluation results of Table 7 that the total heat exchanging element paper characterized in that the natural pulp has an average fiber length of 0.7 to 1.7 mm and a maximum frequency peak between 0.5 mm and 1.5 mm in the fiber length histogram, the percentage of fibers having a fiber length of 1.0 mm or more is 20 % or more and the substrate sheet contains dry silica fine particles is excellent in strength, gas barrier properties and moisture resistance. It is understood from Comparative Example 7-1 that when the percentage of fibers having a fiber length of 1.0 mm or more is smaller than 20 %, strength is not obtained. It is also understood from Comparative Examples 7-2 to 7-4 that when the average fiber length is larger than 1.7 mm and/or when the fiber length at the maximum frequency peak does not fall within a range of 0.5 to 1.5 mm, gas barrier properties are not obtained. It is understood from comparison among Examples 7-1 to 7-4 that Example 7-1 and Example 7-3 having a second peak at a fiber length of 0.0 to 0.5 mm have higher gas barrier properties than Example 7-2 and Example 7-4 having no second peak at a range of 0.0 to 0.5 mm. In Example 7-5 to 7-9, moisture resistance is improved by containing dry silica fine particles. In Example 7-10 in which the percentage of the dry silica fine particles is smaller than 0.5 mass%, the effect of improving moisture resistance is small but strength and gas barrier properties are excellent.

### (Examples 8-1 to 8-10, Comparative Examples 8-1 to 8-4)

After NBKP was dissociated to a concentration of 3 %, natural pulp having physical property values shown in Table 8 was obtained by using a double disk refiner and a deluxe finer. Thereafter, a raw fabric for a substrate sheet having a weight of 45 g/m² was manufactured with a fourdrinier papermaking machine. Further, this raw fabric was impregnated with a coating solution containing CMC DAICEL (registered trademark) P/No. 1110 (manufactured by Daicel FineChem Ltd.: carboxymethyl cellulose, substitution degree of 0.6 to 0.8, viscosity of 150 mPa·s) as a water-soluble cellulose derivative by a nip coater at a speed of 60 m/min and a nip pressure of 343 kPa to ensure that its content became a value shown in Table 8 and dried to manufacture a substrate sheet. Thereafter, the substrate sheet was impregnated with 2 g/m² of calcium chloride as a moisture absorber and dried to obtain a total heat exchanging element paper.

### [moisture permeability: method of evaluating moisture permeability of total heat exchanging element paper]

Moisture permeability was measured by a moisture permeability testing method specified in JIS Z0208:1976 at a temperature of 20°C and a relative humidity of 65 %.

⊚: Extremely excellent with a moisture permeability of 600 g/m²·24 h or more
○: Excellent with a moisture permeability of 400 g/m²·24 h or more and less than 600 g/m²·24 h.
Δ: Acceptable with a moisture permeability of 300 g/m²·24 h or more and less than 400 g/m²·24 h.
x: Not usable with a moisture permeability of less than 300 g/m²·24 h.

**[Table 8]-1**

| | Physical property value of natural pulp | | | | |
|---|---|---|---|---|---|
| | Freeness (ml) | Percentage of fibers having a fiber length of 1.0mm or more (%) | Average fiber length (mm) | Fiber length at maximum frequency peak (mm) | Fiber length at second peak (mm) |
| Ex.8-1 | 160 | 42.3 | 1.01 | 0.975 | 0.125 |
| Ex.8-2 | 160 | 42.3 | 1.01 | 0.975 | 0.125 |
| Ex.8-3 | 160 | 42.3 | 1.01 | 0.975 | 0.125 |
| Ex.8-4 | 120 | 28.9 | 0.91 | 0.975 | 0.125 |
| Ex.8-5 | 210 | 28.9 | 0.91 | 0.975 | 0.825 |
| Ex.8-6 | 135 | 36.4 | 0.95 | 0.975 | 0.125 |
| Ex.8-7 | 200 | 36.4 | 0.95 | 0.975 | 0.725 |
| Ex.8-8 | 160 | 42.3 | 1.01 | 0.975 | 0.125 |
| Ex.8-9 | 160 | 42.3 | 1.01 | 0.975 | 0.125 |
| Ex.8-10 | 160 | 42.3 | 1.01 | 0.975 | 0.125 |
| C.Ex. 8-1 | 120 (modified method) | 18.4 | 0.62 | 0.125 | nil |
| C.Ex. 8-2 | 200 | 54.4 | 1.65 | 1.555 | 0.125 |
| C.Ex. 8-3 | 320 | 73.1 | 1.88 | 2.315 | 0.255 |
| C.Ex. 8-4 | 410 | 77.1 | 1.98 | 2.355 | 2.505 |

| | | | | | |
|---|---|---|---|---|---|
| Ex.: Example, C.Ex.: Comparative Example | | | | | |

**[Table 8]-2**

| | Contents | Evaluation | | |
|---|---|---|---|---|
| | Water-soluble cellulose derivative (g/m²) | Strength - | Gas barrier properties - | Moisture resistance |
| Ex.8-1 | 0.5 | ⊚ | ○ | ○ |
| Ex.8-2 | 4 | ⊚ | ○ | ⊚ |
| Ex.8-3 | 10 | ⊚ | ○ | ⊚ |
| Ex.8-4 | 4 | ○ | ⊚ | ⊚ |
| Ex.8-5 | 4 | ○ | Δ | ⊚ |
| Ex.8-6 | 4 | ○ | ○ | ⊚ |
| Ex.8-7 | 4 | ○ | Δ | ⊚ |
| Ex.8-8 | 0 | ○ | ○ | Δ |
| Ex.8-9 | 0.2 | ○ | ○ | Δ |
| Ex.8-10 | 12 | Δ | ○ | ⊚ |
| C.Ex. 8-1 | 4 | X | ⊚ | ○ |
| C.Ex. 8-2 | 4 | ⊚ | X | ○ |
| C.Ex. 8-3 | 4 | ⊚ | X | ○ |
| C.Ex. 8-4 | 4 | ⊚ | X | ○ |

| | | | | |
|---|---|---|---|---|
| Ex.: Example, C.Ex.: Comparative Example | | | | |

It is understood from the evaluation results of Table 8 that the total heat exchanging element paper characterized in that the natural pulp has an average fiber length of 0.7 to 1.7 mm and a maximum frequency peak between 0.5 mm and 1.5 mm in the fiber length histogram, the percentage of fibers having a fiber length of 1.0 mm or more is 20 % or more and the substrate sheet contains a water-soluble cellulose derivative is excellent in strength, gas barrier properties and moisture permeability. Since the total heat exchanging element papers of Examples 8-8 and 8-9 do not contain the water-soluble cellulose derivative or have a low content of the water-soluble cellulose derivative, the effect of improving moisture permeability is small but strength and gas barrier properties are excellent. Since the total heat exchanging element paper of Example 8-10 has a content of the water-soluble cellulose derivative of more than 10 g/m², the effect of improving moisture permeability reaches a ceiling as compared with Examples 8-1 to 8-3 and strength tends to become low.

It is understood from Comparative Example 8-1 that when the percentage of fibers having a fiber length of 1.0 mm or more is smaller than 20 %, strength is not obtained. It is also understood from Comparative Examples 8-2 to 8-4 that when the average fiber length is larger than 1.7 mm and/or when the fiber length at the maximum frequency peak does not fall within a range of 0.5 to 1.5 mm, gas barrier properties are not obtained.

It is understood that Examples 8-1 to 8-4, 8-6 and 8-8 to 8-10 having a second peak at a range of 0.0 to 0.5 mm are superior in gas barrier properties to Examples 8-5 and 8-7 having no second peak at a range of 0.0 to 0.5 mm.

### INDUSTRIAL FEASIBILITY

The total heat exchanging element paper of the present invention is used in the total heat exchanging element of a total heat exchanger which carries out the exchange of temperature (sensible heat) and humidity (latent heat) at the time of supplying fresh air and discharging foul indoor air.

## Claims

1. A total heat exchanging element paper, which comprises a substrate sheet comprising natural pulp, wherein
the substrate sheet contains natural pulp having a length-weighted average fiber length of 0.7 to 1.7 mm, the natural pulp has a maximum frequency peak between 0.5 mm and 1.5 mm in the fiber length histogram, and a percentage of fibers having a fiber length of 1.0 mm or more is 20 % or more.

2. The total heat exchanging element paper according to claim 1, wherein the natural pulp has a peak between 0.0 mm and 0.5 mm besides the maximum frequency peak in the fiber length histogram.

3. The total heat exchanging element paper according to claim 1, wherein an inclination of a percentage of fibers having a fiber length in increments of 0.05 mm between 1.00 mm and 2.00 mm is -3.0 to -1.0.

4. The total heat exchanging element paper according to any one of claims 1 to 3, wherein the substrate sheet further comprises colloidal silica.

5. The total heat exchanging element paper according to any one of claims 1 to 4, wherein the substrate sheet further comprises polystyrene sulfonic acid.

6. The total heat exchanging element paper according to any one of claims 1 to 5, which further comprises alumina sol.

7. The total heat exchanging element paper according to any one of claims 1 to 6, which further comprises polyvinyl alcohol having a saponification degree of 60 to 85 mol%.

8. The total heat exchanging element paper according to any one of claims 1 to 7, wherein the substrate sheet further comprises dry silica fine particles.

9. The total heat exchanging element paper according to any one of claims 1 to 8, wherein the substrate sheet further comprises a water-soluble cellulose derivative.

10. A total heat exchanging element which is formed by using the total heat exchanging element paper of any one of claims 1 to 9.
